# EUROPÄISCHE PATENTSCHRIFT

(11) **EP 1 074 175 B1**
(45) Veröffentlichungstag und Bekanntmachung des Hinweises auf die Patenterteilung: **09.06.2004**
(21) Anmeldenummer: 00115974.8
(22) Anmeldetag: 26.07.2000
(51) Int. Cl.: A01D 41/12, A01F 12/40

(54) **Verteiler für von einem Mähdrescher ausgeworfene Erntegutreste**
Distributor for the residues of crops ejected from a combine
Distributeur pour le résidu des produits de récolte éjecté d'une moissonneuse-batteuse

(30) Priorität: 06.08.1999 US 369641
(43) Veröffentlichungstag der Anmeldung: 07.02.2001
(73) Patentinhaber: DEERE & COMPANY, Moline, Illinois 61265-8098 (US)
(72) Erfinder: Aubry, Daniel John, Moline, IL 61265 (US); Weber, Jerome Lawrence, Rock Island, IL 61201 (US); Grywacheski, Sheldon Joseph, Eldridge, IA 52748 (US)
(74) Vertreter: Holst, Sönke, Dr.

(56) Entgegenhaltungen:
- EP-A- 0 635 198
- EP-A- 0 748 583
- WO-A-92/05687
- DE-A- 3 119 954
- DE-A- 19 750 393
- DE-U- 29 822 621
- US-A- 1 625 353
- US-A- 5 082 186

## Beschreibung

Die Erfindung betrifft einen Mähdrescher mit einem Verteiler für ausgeworfene Erntegutreste, insbesondere Stroh, wobei der Verteiler zwei drehbar gelagerte Elemente mit jeweils einer oder mehreren radialen Rippen zum Verteilen der Erntegutreste aufweist und um eine quer zur Vorwärtsfahrtrichtung verlaufende Achse schwenkbar am Mähdrescher angebracht ist, so dass die drehbaren Elemente zwischen einer im wesentlichen horizontalen Verteiler-Position und einer angehobenen Schwadablage-Position bewegbar ist, wobei eine obere Abschirmung getragen wird, so dass sie mit dem Verteiler schwenkbar ist, und im Abstand oberhalb der drehbar gelagerten Elemente angeordnet ist, um eine nach oben gerichtete Verteilung des Strohs zu begrenzen.

Die Handhabung von Erntegutresten, d. h. Stroh und Spreu, bei der Ernte wird mit der ansteigenden Verwendung von landwirtschaftlichen Praktiken verminderter oder entfallender Bodenbearbeitung (non-tillage) von immer größerer Wichtigkeit. Durch ein breites Verteilen der Erntegutreste, im Gegensatz zum Ablegen der Erntegutreste in einem engen Schwad unmittelbar hinter dem Mähdrescher, werden die Erntegutreste gleichmäßiger über dem Boden verteilt. Dadurch werden Vorteile während der Pflanzzeit im Frühling erreicht, einschließlich größerer Gleichförmigkeit der Bodentemperatur und größerer Gleichförmigkeit der Grundbedingungen zum Betrieb von Säeinrichtungen. Es ist bekannt, die Erntegutreste an der Rückseite des Mähdreschers mit einer oder zwei drehenden Scheiben auszustreuen. Die rotierenden Scheiben verteilen die Reste über eine breite Fläche hinter dem Mähdrescher. Derartige Verteiler arbeiten gut, solange der Bediener beabsichtigt, die Reste zu verteilen. Wenn der Bediener die Reste zum späteren Aufsammeln in einem Schwad abzulegen wünscht, ist es häufig notwendig, den Verteiler zu entfernen, um einen freien Weg für die Erntegutreste bereitzustellen, so dass sie auf den Boden fallen können. Das ist ein zeitraubender Prozess.

Die DE 298 22 621 U beschreibt einen Spreuverteiler für einen Mähdrescher, bei dem innerhalb eines Gehäuses Laufräder angeordnet sind, von denen sich Flügel radial nach außen erstrecken. Die boden- und oberseitigen Flächen des Gehäuses sind mit einer Reihe von Durchlässen versehen, durch die der Reinigungswind abströmen soll. Der Spreuverteiler ist zwischen einer Betriebsposition und einer Außerbetriebsposition, in der er um eine horizontal und quer zur Fahrtrichtung des Mähdreschers verlaufende Achse nach hinten und oben verschwenkt ist, drehbar.

In der EP 0 748 583 A ist ein Mähdrescher mit einer Axialtrennvorrichtung dargestellt, deren rückwärtiges Ende mit Messern zusammenwirkt, um das Stroh zu zerkleinern. Unterhalb des Endes der Axialtrennvorrichtung befindet sich eine Verteileinrichtung, deren Aufbau nicht detaillierter offenbart ist. Sie ist ebenfalls um eine horizontal und quer zur Fahrtrichtung verlaufende Achse in eine Außerbetriebsstellung verschwenkbar. Es ist nur eine einzige Axialtrennvorrichtung und eine einzige Verteileinrichtung offenbart.

Die US 5 082 186 A zeigt einen Mähderscher mit einem kombinierten Spreu- und Strohverteiler. Beide sind koaxial übereinander angeordnet. Der Strohverteiler besteht aus einer Scheibe mit daran angebrachten Rippen. Ein Verschenken in eine Schwadablageposition wird nicht offenbart.

Die der Erfindung zugrunde liegende Aufgabe wird darin gesehen, einen Verteiler bereitzustellen, der leicht zwischen einer Verteil-Position, in der die Erntegutreste verteilt werden und einer Schadablage-Position, in der die Erntegutreste vom Mähdrescher in einem Schwad geringer Breite abgelegt werden, verbringbar ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der erfindungsgemäße Verteiler ist mit zwei rotierenden Scheiben ausgestattet, die an der Rückseite des Mähdreschers angebracht sind. Die Scheiben weisen mindestens eine erhabene radiale Rippe auf, um in die Erntegutreste einzugreifen und sie zu verteilen, wenn sie sich drehen. Die drehenden Scheiben wirken zusätzlich als Ventilator und erzeugen einen Luftstrom, um die Erntegutreste weiter zu verteilen. Der Verteiler ist um eine quer zur Vorwärtsfahrtrichtung und in der Regel horizontal verlaufende Achse drehbar am Mähdrescher angebracht. Zur Schwadablage werden der Verteiler mit der Scheibe bzw. den Scheiben zum Verteilen der Erntegutreste, insbesondere Stroh, in eine angehobene Position verschwenkt, in der die Erntegutreste vor dem Verteiler aus dem Mähdrescher auf den Boden fallen können. Ist der Verteiler in der im wesentlichen horizontalen Verteiler-Position, werden die Erntegutreste über eine große Breite verteilt. Auf diese Weise erhält man einen Verteiler, der leicht und schnell von der Verteiler-Position in die Schwadablage-Position verbracht werden kann, und umgekehrt. Weiterhin ist eine obere Abschirmung am Verteiler, insbesondere am Rahmen, angebracht, die im Abstand oberhalb des Elements zum Verteilen des Strohs angeordnet ist, um ein Auswerfen der Erntegutreste nach oben zu verhindern. Ein Teiler der oberen Abschirmung dient zur Trennung des Flusses an Erntegutresten zwischen den zwei Scheiben.

Die drehbare Scheibe kann in einem Rahmen angeordnet sein, der um die quer zur Vorwärtsfahrtrichtung des Mähdreschers verlaufende Achse schwenkbar ist.

Auch können sich seitliche Abschirmungen seitlich von der oberen Abschirmung nach außen über die Seitenwände des Mähdreschers hinaus erstrecken, um die Verteilung der Erntegutreste zu steuern. Vordere Abschirmungen können am Mähdrescher vor den seitlichen Abschirmungen und außerhalb der Seitenwände angebracht sein. Es bietet sich an, das Verschwenken des Verteilers durch Gasdruckzylinder zu unterstützen. Der Verteiler kann in der Verteiler-Position arretiert werden, insbesondere durch einen Niederhalteriegel, der der Wirkung des Gasdruckzylinders entgegenwirkt. Auch in der Schwadablage-Position kann der Verteiler durch einen geeigneten Riegel arretiert werden.

In den Zeichnungen ist ein nachfolgend näher beschriebenes Ausführungsbeispiel der Erfindung dargestellt. Es zeigt:
- Fig. 1: eine Seitenansicht eines Mähdreschers mit einem erfindungsgemäßen Verteiler für Erntegutreste;
- Fig. 2: eine Draufsicht auf den Verteiler in der Verteil-Position;
- Fig. 3: eine Ansicht des Verteilers in der Verteil-Position von unten;
- Fig. 4: eine perspektivische Ansicht des Verteilers in der Schwadablage-Position.

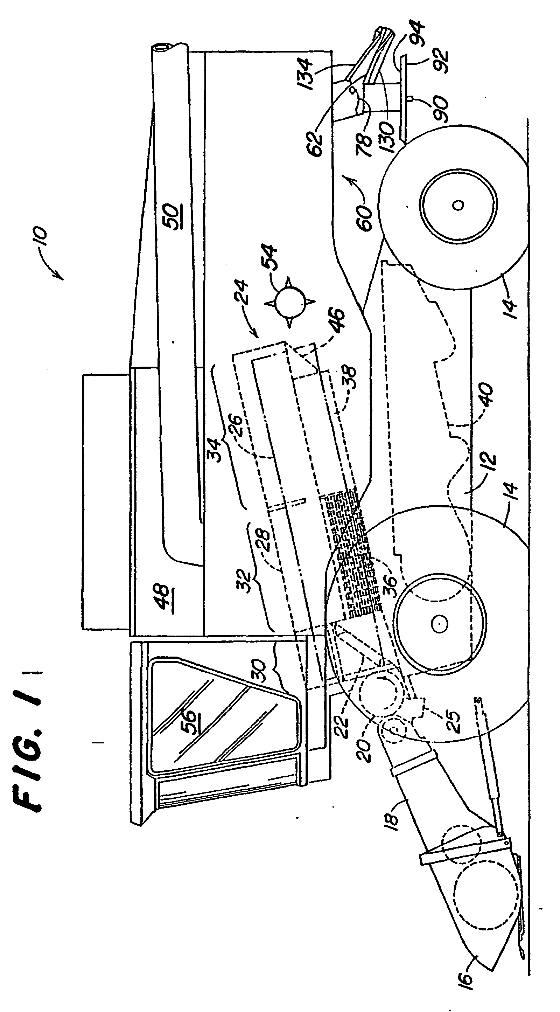

In Figur 1 ist ein landwirtschaftlicher Mähdrescher 10 gezeigt. Der Mähdrescher 10 weist unter anderem einen Trägeraufbau mit einem Paar senkrechter Seitenwände 12 auf, von denen in Figur 1 nur eine gezeigt ist. Der Mähdrescher 10 weist auch im Eingriff mit dem Boden befindliche Räder 14 auf. Ein Schneidwerk 16 wird verwendet, um Gut abzuernten und es einem Schrägförderer 18 zuzuführen. Das geerntete Gut wird durch den Schrägförderer 18 einer Leittrommel 20 zugeführt. Die Leittrommel 20 leitet das Gut nach oben, durch den Einlassübergangsbereich 22 in eine drehbare Gutbearbeitungseinheit 24. Eine Steinfalle 25 ist zwischen dem Schrägförderer 18 und der Leittrommel 20 positioniert. Im folgenden beziehen sich Richtungsangaben (wie vor, hinter etc.) auf die Vorwärtsfahrtrichtung des Mähdreschers 10.

Die drehbare Gutbearbeitungseinheit 24 drischt und trennt das geerntete Gut. Sie umfasst einen Rotor 26 oder ein rotierendes Element, der oder das radial von einem Gehäuse 28 umhüllt wird. Der Rotor und das Gehäuse 28 definieren gemeinsam einen Einlassbereich 30, einen Dreschbereich 32 und einen Trennbereich 34. Der Rotor 26 umfasst eine hohle, zylindrische Trommel mit einer Vielzahl von Gutbearbeitungselementen, die in das Gut eingreifen und es in dem Gehäuse 28 drehen. Der Boden des Gehäuses 28 hat einen Dreschkorb 36 unter dem Dreschbereich 32 und ein Trennrost 38 unter dem Trennbereich 34.

Korn und Spreu, die durch den Dreschkorb 36 und das Trennrost 38 fallen, werden einer Reinigungseinrichtung 40 zugeführt. Die Reinigungseinrichtung 40 umfasst in bekannter Weise ein Gebläse, ein Obersieb und ein Untersieb. Der Luftstrom des Gebläses strömt durch das Unter- und Obersieb, so dass die Spreu nach oben und hinten geblasen wird, während dem Korn ermöglicht wird, durch das Ober- und Untersieb in einen Elevator (nicht gezeigt) für sauberes Korn zu fallen. Der Elevator für sauberes Korn legt das saubere Korn in einem Korntank 48 ab. Das saubere Korn im Korntank 48 kann durch einen Entladeschneckenförderer 50 auf einen Anhänger oder Lastwagen entladen werden. Der Betrieb des Mähdreschers 10 wird von der Bedienerkabine 56 aus gesteuert.

Gedroschene und getrennte Erntegutreste werden durch einen Auslass 52 von der drehbaren Gutbearbeitungseinheit 24 einer Abgabetrommel 54 zugeführt. Die Abgabetrommmel 54 wiederum fördert die Erntegutreste durch eine untere hintere Öffnung 60 hinter der Reinigungseinrichtung 40 aus dem Mähdrescher 10 hinaus. Ein Verteiler 62 ist an der Öffnung 60 an den Seitenwänden 12 angebracht. Wenn der Verteiler 62 in der Verteil-Position ist, empfängt er die Erntegutreste und verteilt sie über eine breite Fläche hinter dem Mähdrescher 10. Während der Verteiler 62 in Verbindung mit einem Mähdrescher 10 mit einer drehbaren Trenneinrichtung gezeigt ist, kann der erfindungsgemäße Verteiler 62 auch an Mähdreschern mit anderen Arten von Separatoren, einschließlich Strohschüttlern, verwendet werden.

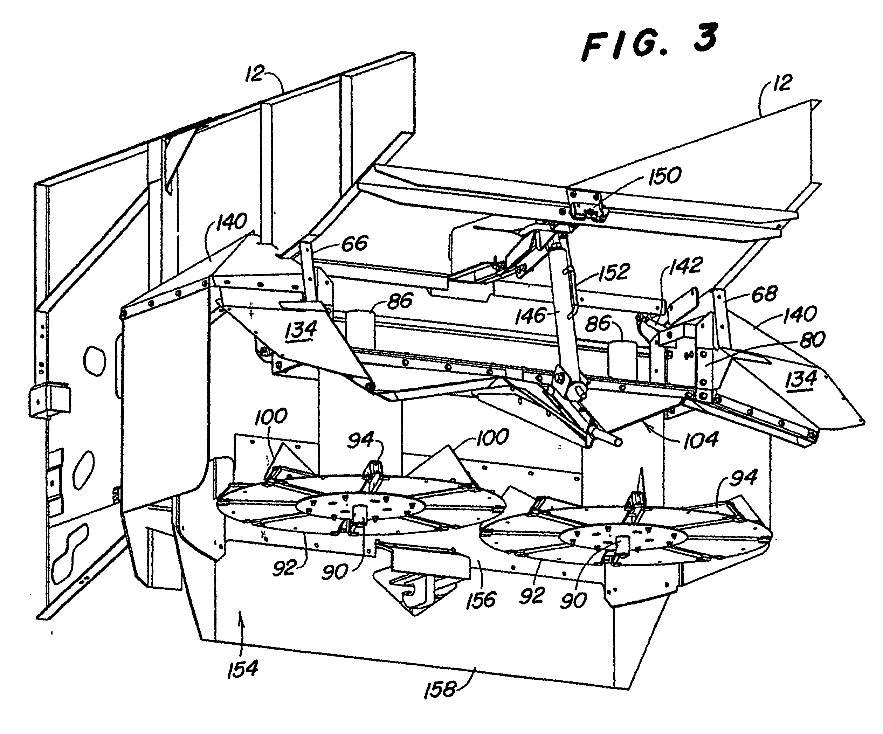

Der Trägeraufbau des Mähdreschers 10 umfasst zwei äußere Seitenplatten 66 und 68 und eine aufrechte Vorderplatte 70, die an den Seitenwänden 12 des Mähdreschers 10 angebracht sind, wie in Figur 3 gezeigt. Ein Rahmen 74 des Verteilers 62 ist an Schwenkpunkten 76 an den Seitenplaten 55, 68 angelenkt, wobei je ein Schwenkpunkt 76 an jeder Seite des Verteilers 62 ist. Der Rahmen 74 umfasst zwei innere Seitenplatten 78 und 80 und eine untere Platte 82. Die zwei Schwenkpunkte 76 koppeln die inneren Seitenplatten 78 und 80 des Rahmens 74 an die äußeren Seitenplatten 66, 68 und definieren eine quer (zur Längsrichtung des Mähdreschers 10) verlaufende Schwenkachse 84.

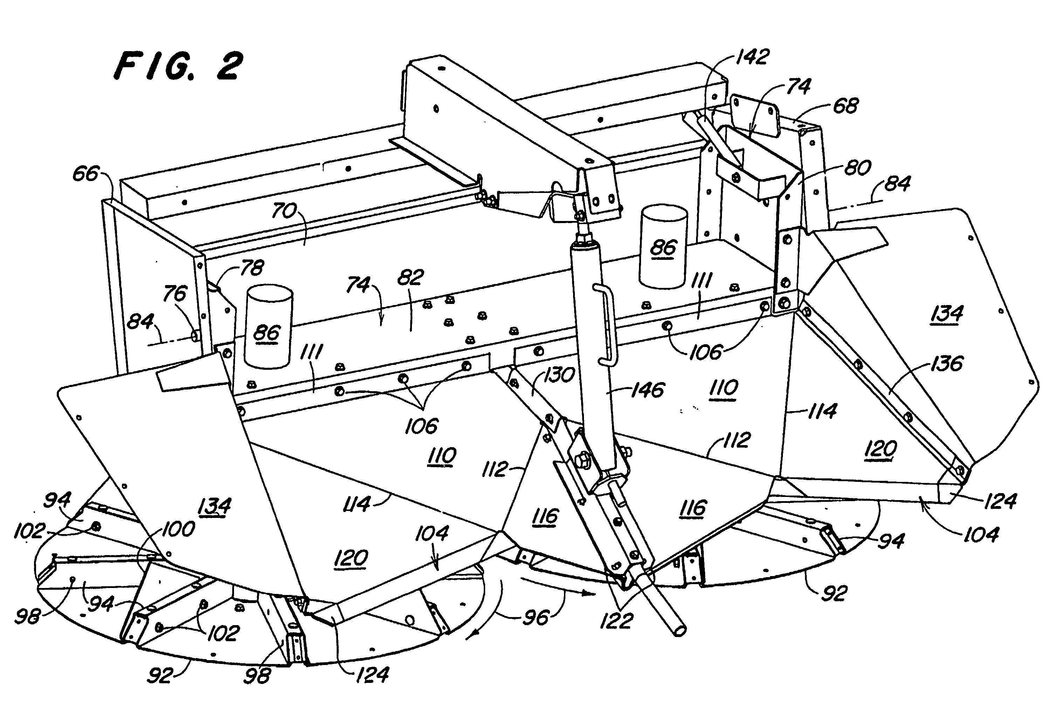

Hydraulische Motoren 86 sind an der unteren Platte 82 des Rahmens 74 befestigt. Jeder Motor 86 hat eine Ausgangswelle 90, die sich vom Motor 86 nach unten, unter die untere Platte 82, erstreckt. Jeweils eine Scheibe 92 ist an jede der Ausgangswellen 90 gekoppelt, um sich mit ihnen zu drehen. Die Scheiben 92 sind mit erhabenen radialen Rippen 94 hergestellt. Die Scheiben 92 drehen sich gegensinnig, wie durch die Pfeile in Figur 2 angedeutet wird. Optionale Schneiden 100 können an den radialen Rippen 94 mit Befestigungselementen 102 befestigt werden, die sich durch Öffnungen 98 in den Rippen 94 erstrecken. Die Schneiden 100 können an einigen oder allen der Rippen 94 befestigt werden, solange die Scheiben 92 ausgewuchtet bleiben. Die den Mähdrescher 10 durch die Öffnung 60 verlassenden Erntegutreste werden von den Rippen 94 und Schneiden 100 der rotierenden Scheiben 92 erfasst, um die Erntegutreste zu fördern und über eine große Breite hinter dem Mähdrescher 10 zu verteilen. Die Schneiden 100 fungieren als Gebläse, um Luft aus dem Mähdrescher 10 anzusaugen und einen nach hinten und zu den Seiten gerichteten Luftstrom zu erzeugen und auf diese Weise die Ablage der Erntegutreste zu unterstützen.

Eine Ummantelung ist oberhalb der Scheiben 92 und um sie herum bereitgestellt, um die Führung der Erntegutreste beim Verteilen zu unterstützten. Die Ummantelung umfasst eine obere Abschirmung 104 über jeder Scheibe 92, hinter den Wellen 90. Jede obere Abschirmung 104 ist durch eine Vielzahl von Befestigungseinrichtungen 106 mit Schrauben und Muttern mit der unteren Platte 82 verbunden. Die oberen Abschirmungen 104 sind im wesentlichen aus drei Abschnitten gebildet, einem mittleren Abschnitt 110 der Abschirmung 104, einem inneren Abschnitt 116 der Abschirmung 104 und einem äußeren Abschnitt 120 der Abschirmung 104. Die drei Abschnitte 110, 116 und 120 sind im wesentlichen dreieckiger Form. Die oberen Abschirmungen 104 sind vorzugsweise jeweils als einzelnes Stück gestanzten Blechmetalls mit einer Falz (Knick) 112 zwischen dem mittleren Abschnitt 110 und dem inneren Abschnitt 116 und einem Falz (Knick) 114 zwischen dem mittleren Abschnitt 110 und dem äußeren Abschnitt 120 hergestellt. Die Abschnitte könnten auch als getrennte, zusammengeschraubte Komponenten hergestellt werden. Der mittlere Abschnitt 110 hat eine vordere Kante 111, die an der unteren Platte 82 befestigt ist.

Die drei Abschnitte 110, 116, 120 der oberen Abschirmung 104 neigen sich von der vorderen Kante 111 nach unten. Die inneren Abschnitte 116 neigen sich auch zu einer inneren unteren Ecke 122 hin, während die äußeren Abschnitte 120 sich zu äußeren unteren Ecken 124 hin neigen. Die inneren Abschnitte 116 und die äußeren Abschnitte 120 haben eine größere Neigung nach unten als die mittleren Abschnitte 110. Die inneren unteren Ecken 112 sind geringfügig niedriger als die äußeren unteren Ecken 124.

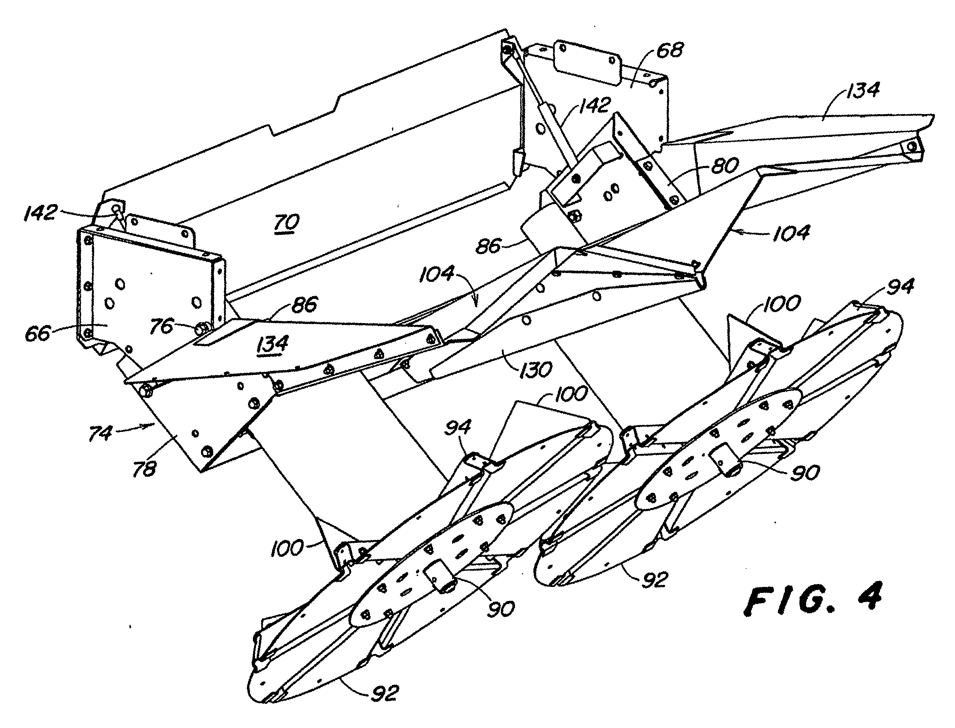

Ein Teiler 130 zwischen den zwei oberen Abschirmungen 104 ersteckt sich von den mittleren und inneren Abschnitten 110, 116 in Richtung auf die Scheiben 92 zu nach unten, wie am besten anhand der Figur 4 erkennbar ist. Der Teiler 130 dient zur Trennung des Flusses an Erntegutresten zwischen den zwei Scheiben 92.

Seitliche Abschirmungen 134 sind entlang äußeren Kanten 136 der oberen Abschirmungen 104 befestigt. Die seitlichen Abschirmungen 134 erstrecken sich zunächst nach oben und ragen dann von den äußeren Kanten 136 nach außen. Zusätzliche vordere Abschirmungen 140 (Figur 3) sind vor den seitlichen Abschirmungen 134 bereitgestellt. Die vorderen Abschirmungen 140 sind an den Seitenwänden 12 des Mähdreschers befestigt und erstrecken sich über die Seitenwände 12 hinaus nach außen. Eine Schürze 138 kann den vorderen Abschirmungen 104 hinzugefügt werden und von ihnen nach unten hängen. Die oberen Abschirmungen 104, seitlichen Abschirmungen 134 und vorderen Abschirmungen 140 verhindern, dass die Erntegutreste nach oben ausgestreut werden.

Eine untere Platte 154, Figur 3, erstreckt sich an der Rückseite des Reinigungssystems 40 vor den Scheiben 92 nach unten. Die untere Platte 154 hat einen oberen Metallabschnitt 156 und eine untere, hängende Schürze 158. Die Schürze 158 verleiht der Platte 154 Flexibilität beim Zugang zu Bereichen des Mähdreschers 10 vor der Platte 154. Die untere Platte 154 hilft, ein Ablegen der Erntegutreste nach vorn zu verhindern.

Der Rahmen 74 des Verteilers 62 hat eine Verteil-Position, wie sie in den Figuren 1 bis 3 dargestellt ist, in denen die Wellen 90 im wesentlichen vertikal und die Scheiben 92 im wesentlichen horizontal orientiert sind. Es handelt sich um die Betriebsposition zum Verteilen, in der Erntegutreste aus dem Mähdrescher 10 von den Scheiben 92 empfangen und durch sie verteilt werden. In dieser Position ermöglicht die hinter der Reinigungseinrichtung 40 vorgesehene Ummantelung der Scheiben 92 und der unteren Platte 154 des Mähdreschers 10 den drehenden Scheiben 92, Luft von der Reinigungseinrichtung 40 des Mähdreschers 10 anzusaugen.

Der Rahmen 74 ist um die Schwenkachse 84 in eine rückwärtige, angehobene Position drehbar, die in Figur 3 gezeigt ist. Dies ist eine Schadablage-Position, in der die Scheiben 92 nicht gedreht werden. Den Erntegutresten aus dem Mähdrescher 10 wird es ermöglicht, aus dem Mähdrescher 10 direkt auf den Erdboden zu fallen, ohne über eine weite Fläche verteilt zu werden. Dadurch werden die Erntegutreste in einem Schwad zurückgelassen, um sie später aufzusammeln. Gasdruckzylinder 142 sind an jeder Seite des Verteilers 62 bereitgestellt, um das Anheben des Verteilers 62 in die Schwadablage-Position zu erleichtern. Die Gasdruckzylinder 142 erstrecken sich zwischen dem Rahmen 74 und der Vorderplatte 70 des Trägeraufbaus des Mähdreschers 10. Die Gasdruckzylinder 142 stellen eine Vorspannkraft auf den Rahmen 74 bereit, um den Rahmen in die Schwadablage-Position zu drücken. Es können auch andere Vorspann-Mechanismen benutzt werden, wie eine Feder. Außerdem kann auch ein angetriebener Anhebemechanismus wie ein hydraulischer Zylinder oder eine motorbetriebenes Gestänge (oder Kopplung) verwendet werden.

Ein Niederhalteriegel 146 erstreckt sich zwischen dem Rahmen des Mähdreschers 10 oberhalb des Verteilers 62 und den oberen Abschirmungen 104. Der Niederhalteriegel 146 hält den Verteiler 62 entgegen der Kraft der Gasdruckzylinder 142 in der Verteil-Position. Der Niederhalteriegel 146 wird manuell freigegeben, um dem Verteiler 62 zu ermöglichen, in die Schwadablage-Position zu rotieren.

Ein oberer Riegel 150 (Figur 3) am Rahmen des Mähdreschers 10 stellt sicher, dass der Verteiler 62 in der Schwadablage-Position verbleibt, und dass das Gewicht des Verteilers 62 und Vibrationskräfte nicht nur von den Gasdruckzylindern 142 aufgenommen werden müssen. Der obere Riegel 150 wirkt mit einer Anschlagschiene 152 am Niederhalteriegel 146 zusammen, um den Rahmen 74 in der Schwadablage-Position zu halten. Der Riegel 150 wird manuell freigegeben, um den Verteiler 62 in die Verteil-Position herunter zu drehen. Sobald der Riegel 150 freigegeben ist, drückt der Bediener die oberen Abschirmungen 104 manuell nach unten, gegen die Gasdruckzylinder 142, um den Verteiler 62 wieder in die Verteil-Position zurück zu verbringen. Der Niederhalteriegel 146 wird dann manuell eingerückt, um den Verteiler 62 in der Verteil-Position zu halten. Eine Person kann den Verteiler 62 von der Verteil-Position leicht in Sekunden in die Schwadablage-Position verbringen oder umgekehrt.

Der erfindungsgemäße Verteiler 62 wirkt, um Erntegutreste effektiv und gleichmäßig über eine breite Fläche an der Rückseite des Mähdreschers 10 zu verteilen. Zusätzlich kann der Verteiler 62 leicht in eine Schwadablage-Position verbracht werden, ohne den Verteiler 62 ganz vom Mähdrescher 10 zu entfernen. Das vermeidet den schwierigen und zeitaufwändigen Prozess, der häufig erforderlich ist, wenn es gewünscht wird, die Erntegutreste in einem Schwad abzulegen.

## Patentansprüche

1. Mähdrescher (10) mit einem Verteiler (62) für ausgeworfene Erntegutreste, insbesondere Stroh, wobei der Verteiler (62) zwei drehbar gelagerte Elemente mit jeweils einer oder mehreren radialen Rippen (94) zum Verteilen der Erntegutreste aufweist und um eine quer zur Vorwärtsfahrtrichtung verlaufende Achse schwenkbar am Mähdrescher (10) angebracht ist, so dass die drehbaren Elemente zwischen einer im wesentlichen horizontalen Verteiler-Position und einer angehobenen Schwadablage-Position bewegbar ist, wobei eine obere Abschirmung (104) getragen wird, so dass sie mit dem Verteiler (62) schwenkbar ist, und im Abstand oberhalb der drehbar gelagerten Elemente angeordnet ist, um eine nach oben gerichtete Verteilung des Strohs zu begrenzen, **dadurch gekennzeichnet, dass** die drehbaren Elemente Scheiben (92) sind, über deren Oberfläche sich die Rippen (94) erstrecken, und dass die obere Abschirmung (104) einen Teiler (130) aufweist, der sich zwischen zwei Scheiben (92) nach unten erstreckt, um den Fluss der Erntegutreste zwischen den zwei Scheiben (92) aufzuteilen.

2. Mähdrescher (10) nach Anspruch 1, **dadurch gekennzeichnet, dass** die Scheibe (92) in einem schwenkbaren Rahmen (74) des Verteilers (62) angeordnet ist.

3. Mähdrescher (10) nach Anspruch 2, **dadurch gekennzeichnet, dass** die obere Abschirmung (104) vom Rahmen (74) getragen wird.

4. Mähdrescher (10) nach einem der vorhergehenden Ansprüche, **gekennzeichnet durch** seitliche Abschirmungen (134), die sich seitlich über den Aufbau des Mähdreschers (10) heraus erstrecken und vom Verteiler (62), insbesondere dem Rahmen (74), getragen werden, um gemeinsam mit dem Verteiler (62) zu schwenken.

5. Mähdrescher (10) nach einem der vorhergehenden Ansprüche, **gekennzeichnet durch** vordere Abschirmungen (140), die vorzugsweise vor den seitlichen Abschirmungen (134) außerhalb des Aufbaus des Mähdreschers (10) angeordnet und am Aufbau des Mähdreschers (10) befestigt sind.

6. Mähdrescher (10) nach einem der Ansprüche 1 bis 5, **dadurch gekennzeichnet, dass** die obere Abschirmung (104) drei miteinander verbundene, geneigte Abschnitte (110, 116, 120) aufweist, die einen mittleren Abschnitt (110), einen inneren Abschnitt (116) und einen äußeren Abschnitt (120) oberhalb des Elements zum Verteilen der Erntegutreste bilden.

7. Mähdrescher (10) nach Anspruch 6, **dadurch gekennzeichnet, dass** die Abschnitte (110, 116, 120) im wesentlichen dreieckig geformt sind.

8. Mähdrescher (10) nach Anspruch 6 oder 7, **dadurch gekennzeichnet, dass** der mittlere Abschnitt (110) vom Rahmen (74) nach unten und hinten geneigt ist, und dass sich der innere und äußere Abschnitt (116, 120) vom mittleren Abschnitt (110) mit einer größeren Neigung als der mittlere Abschnitt (110) zu inneren bzw. äußeren unteren Ecken neigen, wobei die innere untere Ecke vorzugsweise niedriger als die äußere untere Ecke ist.

9. Mähdrescher (10) nach einem der vorhergehenden Ansprüche, **gekennzeichnet durch** Mittel zum Anheben des Verteilers (62) in die Schwadablage-Position, insbesondere Gasdruckzylinder (142).

10. Mähdrescher (10) nach einem der vorhergehenden Ansprüche, **dadurch gekennzeichnet, dass** der Verteiler (62) in der Verteiler-Position und/oder der Schwadablage-Position arretierbar ist.

## Claims

1. A combine (10) with a spreader (62) for discharged crop residues, in particular straw, the spreader (62) comprising two rotatably carried elements with one or more radial ridges (94), respectively, for dispersing the crop residues, the spreader (62) being pivotally mounted to the combine (10) for rotation about an axis extending transversely to the forward direction of the combine (10) such that the rotatable elements can be moved between a generally horizontal spreading position and a raised windrowing position, whereby a top shroud (104) is carried for pivotal movement with the spreader (62) and spaced above the rotatably supported elements to limit upward dispersal of the straw, **characterized in that** the rotatable elements are disks (92) over the surface of which the ridges (94) extend, and that the top shroud (104) comprises a divider (130) projecting downward between two disks (92) for dispersing the crop residues to divide the flow of straw between the two disks (92).

2. A combine (10) according to claim 1, **characterized in that** the disk (92) is arranged in a pivotable frame (74) of the spreader (62).

3. A combine (10) according to claim 2, **characterized in that** the top shroud (104) is carried by the frame (74).

4. A combine (10) according to one of the preceding claims, **characterized by** side shrouds (134) extending laterally beyond the structure of the combine (10) and carried by the spreader (62), in particular by the frame (74), for pivotal movement with the spreader (62).

5. A combine (10) according to one of the preceding claims, **characterized by** front shrouds (140) preferably forward of the side shrouds (134) and outboard of the structure of the combine (10), the front shrouds (134) being fixedly mounted to the structure of the combine (10).

6. A combine (10) according to one of claims 1 to 5, **characterized in that** the top shroud (104) includes three inclined sections (110, 116, 120) joined to each other forming a center section (110), an inner section (116) and an outer section (120) above the disk (92) for dispersing the crop residues.

7. A combine (10) according to claim 6, **characterized in that** the sections (110, 116, 120) are generally triangular in shape.

8. A combine (10) according to claim 6 or 7, **characterized in that** the center section (110) is sloped downward and rearward from the frame (74) and the inner and outer sections (116, 120) slope downward from the center section (110) at a greater slope that the center section (110) to inner and outer lower corners respectively, whereby the inner lower corner is preferably lower than the outer lower corner.

9. A combine (10) according to one of the preceding claims, **characterized by** a means for lifting the spreader (62) to the windrowing position, preferably gas assist cylinders (142).

10. A combine (10) according to one of the preceding claims, **characterized in that** the spreader (62) can be latched in the spreading position and/or the windrowing position.

## Revendications

1. Moissonneuse-batteuse (10) muni d'un distributeur (62) pour le résidu des produits de récolte éjecté, en particulier de la paille, dans lequel le distributeur (62) présente deux éléments positionnés en rotation avec respectivement une ou plusieurs nervures radiales (94) pour distribuer le résidu des produits de récolte et est placé sur la moissonneuse-batteuse (10) autour d'un axe passant transversalement par rapport à la direction de marche avant de façon à pouvoir pivoter, de telle sorte que les éléments rotatifs peuvent être déplacés entre une position de distribution essentiellement horizontale et une position élevée de bac à andain, dans lequel un écran supérieur (104) est soutenu de telle sorte qu'il puisse être pivoté avec le distributeur (62) et être disposé à distance au-dessus des éléments positionnés en rotation pour limiter une distribution de la paille vers le haut, **caractérisée en ce que** les éléments rotatifs sont des disques (92) à la surface desquels s'étendent les nervures (94), et **en ce que** l'écran supérieur (104) présente un répartisseur (130) qui s'étend vers le bas entre deux disques (92) pour répartir le flux de résidu des produits de récolte entre les deux disques (92).

2. Moissonneuse-batteuse (10) selon la revendication 1, **caractérisée en ce que** le disque (92) est placé dans un cadre pivotant (74) du distributeur (62).

3. Moissonneuse-batteuse (10) selon la revendication 2, **caractérisée en ce que** l'écran supérieur (104) est porté par le cadre (74).

4. Moissonneuse-batteuse (10) selon l'une quelconque des revendications précédentes, **caractérisée par** des écrans latéraux (134) qui s'étendent latéralement par delà la structure de la moissonneuse-batteuse (10) et qui sont portés par le distributeur (62), en particulier par le cadre (74), pour pivoter ensemble avec le distributeur (62).

5. Moissonneuse-batteuse (10) selon l'une quelconque des revendications précédentes, **caractérisée par** des écrans avant (140) qui sont placés de préférence devant les écrans latéraux (134) en dehors de la structure de la moissonneuse-batteuse (10) et fixés sur la structure de la moissonneuse-batteuse (10).

6. Moissonneuse-batteuse (10) selon l'une quelconque des revendications précédentes, **caractérisée en ce que** l'écran supérieur (104) présente trois tronçons inclinés, reliés les uns aux autres (110, 116, 120), qui forment un tronçon médian (110), un tronçon interne (116) et un tronçon externe (120) au-dessus de l'élément pour distribuer le résidu des produits de récolte.

7. Moissonneuse-batteuse (10) selon la revendication 6, **caractérisée en ce que** les tronçons (110, 116, 120) sont formés principalement en triangle.

8. Moissonneuse-batteuse (10) selon la revendication 6 ou 7, **caractérisée en ce que** le tronçon médian (110) est incliné à partir du cadre (74) vers le bas et l'arrière et **en ce que** le tronçon interne et le tronçon externe (116, 120) s'inclinent du tronçon médian (110) avec une pente plus importante que le tronçon médian (110) vers les coins internes ou externes, de sorte que le coin interne inférieur est, de préférence, plus bas que le coin externe inférieur.

9. Moissonneuse-batteuse (10) selon l'une quelconque des revendications précédentes, **caractérisée par** des moyens pour lever le distributeur (62) en position de bac à andain, en particulier des piston à gaz sous pression (142).

10. Moissonneuse-batteuse (10) selon l'une quelconque des revendications précédentes, **caractérisée en ce que** le distributeur (62) peut être arrêté en position de distribution et/ou en position de bac à andain.
